(19) Europäisches Patentamt
European Patent Office
Office européen des brevets

(11) **EP 3 767 543 B1**

(12) **EUROPEAN PATENT SPECIFICATION**

(45) Date of publication and mention
of the grant of the patent:
**17.09.2025   Bulletin 2025/38**

(21) Application number: **19186797.7**

(22) Date of filing: **17.07.2019**

(51) International Patent Classification (IPC):
*G06N 3/045* *(2023.01)*

(52) Cooperative Patent Classification (CPC):
**G06N 3/045**

(54) **DEVICE AND METHOD FOR OPERATING A NEURAL NETWORK**

VORRICHTUNG UND VERFAHREN ZUM BETRIEB EINES NEURONALEN NETZES

DISPOSITIF ET PROCÉDÉ DE FONCTIONNEMENT D'UN RÉSEAU NEURONAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.01.2021   Bulletin 2021/03**

(73) Proprietor: **Robert Bosch GmbH
70442 Stuttgart (DE)**

(72) Inventors:
• **Fischer, Volker
71229 Leonberg (DE)**
• **Khoreva, Anna
70197 Stuttgart (DE)**

• **Munoz Delgado, Andres Mauricio
71263 Weil Der Stadt (DE)**
• **Hoyer, Lukas
39175 Biederitz (DE)**
• **Katiyar, Prateek
72074 Tuebingen (DE)**

(56) References cited:
• **RUTH FONG ET AL: "Interpretable Explanations
of Black Boxes by Meaningful Perturbation",
ARXIV.ORG, CORNELL UNIVERSITY LIBRARY,
201 OLIN LIBRARY CORNELL UNIVERSITY
ITHACA, NY 14853, 11 April 2017 (2017-04-11),
XP081305661, DOI: 10.1109/ICCV.2017.371**

**Description**

The present disclosure relates to devices and methods for operating a neural network. Neural networks are becoming more and more widely used to classify images into a pre-defined number of classes. Understanding how the neural network has reached its results can greatly help in determining how trustworthy the classification is, but is alas notoriously difficult.

The publication "Deep inside convolutional networks: Visualising image classification models and saliency maps" by Karen Simonyan, Andrea Vedaldi, and Andrew Zisserman, in International Conference on Learning Representations (ICLR), 2013, describes interpreting a network decision making process by generating low-level visual explanations. Such and similar approaches mostly focus on the task of image classification and can be divided into two categories: gradient-based and perturbation-based methods.

The publication "Interpretable explanations of black boxes by meaningful perturbation" by Ruth C. Fong and Andrea Vedaldi, published in 2017 in the Proceedings of the IEEE international conference on computer vision, discloses a general framework for learning different kinds of explanations for any black box algorithm.

Gradient-based methods compute a saliency map that visualizes the sensitivity of each image pixel to the specific class prediction, which is obtained by backpropagating the gradient for this prediction with respect to the image and estimating how moving along the gradient influences the class output. Gradient based methods mostly rely on heuristics for backpropagation and may provide explanations which are not faithful to the model or data. Perturbation-based methods evaluate the class prediction change with respect to a perturbed image, e.g. for which specific regions of the image are replaced with mean image values or removed by applying blur or Gaussian noise.

Efficient approaches for saliency determination, which are not limited to explanations of image classification networks but also for other neural networks such as dense prediction networks, are desirable.

The invention is set out in the appended set of claims. The method and the device with the features of the independent claims allow providing spatially coherent explanations for neural networks such as dense prediction (or semantic segmentation) networks. For a semantic segmentation neural network, spatial and semantic correlations in the training data picked up by the neural network may thus be discovered and for example taking into account in further processing, such as vehicle control for automated driving.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

> Figure 1 shows an example for object detection in an autonomous driving scenario.
> Figure 2 shows an example of a neural network that can be used to classify images into a pre-defined number of classes.
> Figure 3 illustrates a saliency determination according to an embodiment.
> Figures 4 and 5 show examples for saliencies determined according to an embodiment.
> Figure 6 shows a flow diagram illustrating a method for operating a neural network according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

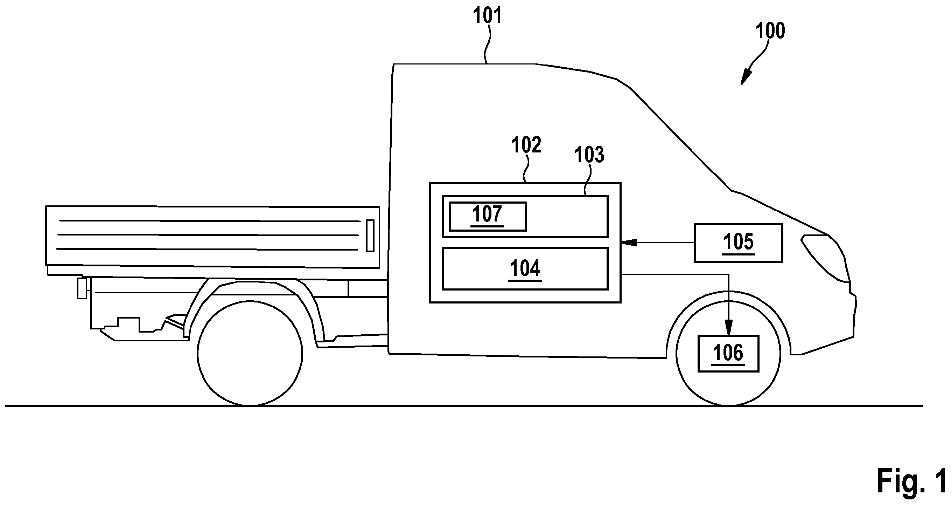

Figure 1 shows an example 100 for object detection in an autonomous driving scenario.

In the example of figure 1, a vehicle 101, for example a car, van or motorcycle is provided with a vehicle controller 102.

The vehicle controller 102 includes data processing components, e.g. a processor (e.g. a CPU (central processing unit)) 103 and a memory 104 for storing control software according to which the vehicle controller 102 operates and data on which the processor 103 operates.

For example, the stored control software includes instructions that, when executed by the processor 103, make the processor implement a neural network 107.

The data stored in memory 104 can include image data from one or more image sources 105, for example acquired by one or more cameras. An image can include a collection of data representing one or more objects or patterns. The one or more image sources 105 may for example output greyscale or colour pictures of the vehicle's environment. The one or more image sources 105 may be responsive to visible light or non-visible light such as e.g. infrared or ultraviolet light, ultrasonic or radar waves, or other electromagnetic or sonic signals.

The vehicle controller 102 may determine the presence of objects, e.g. fixed objects, such as traffic signs or road markings, and/or moving objects, such as pedestrians, animals and other vehicles, based on the image data.

The vehicle 101 may then be controlled by the vehicle controller 102 in accordance with the results of the object determination. For example, the vehicle controller 102 may control an actuator 106 to control the vehicle's speed, e.g. to actuate the brakes of the vehicle.

The control may be performed on the basis of an object classification performed by the neural network 107.

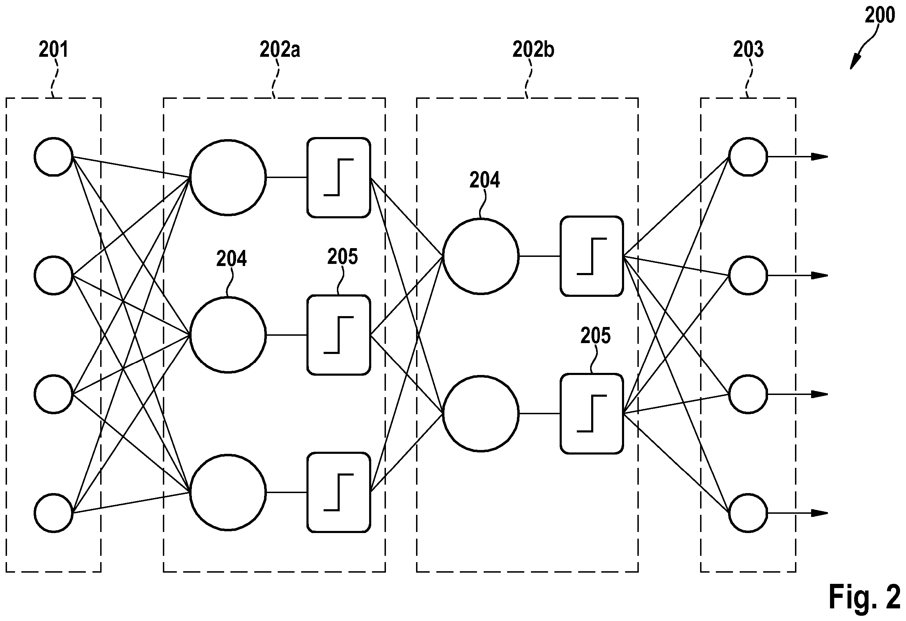

Figure 2 shows an example of a neural network 200 that can be used to classify images into a pre-defined number of classes.

In this example, the neural network 200 includes one input layer 201, two layers 202a and 202b and one output layer 203.

It should be noted that the neural network 200 is a simplified example of an actual deep neural network, e.g. a deep feed forward neural network, used for classification purposes, which may include many more processing nodes and layers.

The input data corresponds to the input layer 201, and can generally be seen as a multidimensional array of values, e.g. an input image can be seen as a 2-dimensional array of values corresponding to the pixel values of the image.

The inputs from the input layer 201 are then connected to processing nodes 204. A typical node 204 multiplies each input with a weight and sums the weighted values up. Additionally, a node 204 may add a bias to the sum.

The nodes 204 are typically each followed by a non-linear activation function 205, e.g. Rectified Linear Unit, ReLU $f(x) = \max(x, 0)$ or a sigmoid function ( $f(x) = \dfrac{1}{1 + \exp(-x)}$ ). The resulting value is then output to the next layer.

Layers 202a and 202b may be hidden layers, e.g. fully connected layers, as shown in Figure 2, where every node of one layer is connected to every node of another layer.

The layers may also be (or be supplemented by) non-fully connected layers, e.g. convolutional or pooling layers in case of a convolutional neural network, CNN (typically followed by one or more hidden layers).

In a convolutional layer, the inputs are modified by convolutional filters. These filters operate on a subset of the input data, and may help to extract features of the input data, e.g. a particular shape or pattern. A filter implemented by the convolutional layer causes several corresponding nodes 204 of the convolutional layer to receive inputs from only a portion of the previous layer.

A pooling layer can be seen as a form of non-linear down-sampling, reducing the dimensions of the data by combining the outputs of several nodes into a single node in the next layer, e.g. by taking the maximum value of the outputs.

In a neural network designed for classification such as neural network 200, the output layer 203 receives values from at least one of the preceding layers, e.g. from a hidden layer 202b. These values may then be turned into probabilities by the output layer, e.g. by applying the softmax function ( $f(x) = \dfrac{\exp(v_i)}{\sum_{k=1}^{K} \exp(v_k)}$ , where $v_i$, i = 1,... ,K, are the values received by the output layer) or the sigmoid function on them. The highest probability value contained in an output vector corresponds to a class prediction.

In the following, class predictions may also be referred to as predictions, predicted class labels or predicted classification labels.

An output vector of output layer 203 is thus a probability vector indicating, for each of the pre-defined classes, the probability that an image corresponds to the pre-defined class, e.g. that it shows a predefined object. For example, assuming there are 10 pre-defined classes (0, 1,..., 9) for the input image of a digit, the output vector is a vector consisting of 10 elements where each element corresponds to the probability for a digit. The class prediction will be the digit corresponding to the highest probability in the output vector. The output layer 203 may output the entire vector consisting of probability values, or only output the class predictions.

For being able to classify an image, the neural network 200 is first trained accordingly. In case of automotive driving, this may be done based on a collection of traffic scenes such as Cityscapes.

It should be noted in the above example, one image is classified, e.g. an image is classified as showing a pedestrian. However, e.g. in automotive driving scenarios, an image (e.g. taken by camera 105) typically includes a plurality of objects. Therefore, in such an application, dense prediction (or semantic segmentation) may be used which can be seen to classify each pixel of an image. For example, certain pixels may be classified to show a pedestrian while others are classified to show another vehicle. Such a dense prediction may be performed analogously using a neural network as explained above for image classification, with the difference that the output includes a class prediction per pixel of an image instead of a class prediction per image. The output for an image $x$ may thus be another image which indicates the class prediction for each pixel (e.g. coded by colour, for example pedestrians green, vehicles red, background grey etc.), i.e. $f(x)$ is itself an image with a plurality of channels corresponding to the possible class predictions. For semantic segmentation a CNN may be used.

In many real-world scenarios, presence of an object, its location and appearance are highly correlated with the contextual information surrounding this object, such as the presence of other nearby objects or more global scene semantics. For example, in the case of an urban street scene, a cyclist is more likely to co-occur on a bicycle and a car is more likely to appear on a road below sky and buildings. These semantic correlations are inherently present in real-world data. A data-driven model, such as a deep neural network 200, is prone to exploit these statistical biases in order to improve its prediction performance. An effective and safe utilization of deep learning models for real-world applications, e.g. autonomous driving, requires a good understanding of these contextual biases inherent in the data and the extent to which a learned model incorporated them into its decision making process. Otherwise, there is a risk that an object is wrongly classified, e.g. because it occurs in an unusual position.

A saliency method may explain predictions of a trained model (e.g. a trained neural network) by highlighting parts of the input that presumably have a high relevance for the model's predictions, i.e. by identifying the image pixels that contribute the most to the network prediction.

An approach for saliency determination, i.e. a saliency method, is provided which can be seen as an extension of a saliency method for image classification towards (pixel-level) dense prediction tasks and which allows to generate spatially coherent explanations by exploiting spatial information in the dense predictions (and to spatially differentiate between prediction explanations).

This approach is referred to as grid saliency, which is a perturbation-based saliency method, based on a formulation as an optimization problem of identifying the minimum unperturbed area of the image needed to retain the network predictions inside a target object region. As grid saliency allows differentiating between objects and their associated context areas in the saliency map, it allows producing context explanations for semantic segmentation networks, discovering which contextual information most influences the class predictions inside a target object area.

Let $f : I \to O$ denote the prediction function, e.g. implemented by a deep neural network 200, which maps a grid input space $I = \mathrm{R}^{H_I \times W_I \times C_I}$ (e.g. input images of an input image space) to a grid output space $O = \mathrm{R}^{H_O \times W_O \times C_O}$ (e.g. output images of an output image space) where $W$ and $H$ are the respective width and height of the input (image) and output (image), and $C_I$ and $C_O$ are the number of input channels (e.g. 3 or 1 for images) and output prediction channels (e.g. number of classes for semantic segmentation).

In the following, for ease of explanation, only images are considered as input and per-pixel dense predictions of the network are considered as output, i.e. the input is an image, $x \in I$ and the output is a per-pixel dense prediction $f(x)$. Furthermore, it is for simplicity assumed that the input and output spatial dimensions are the same.

The grid saliency determination for the input image $x$ can be seen to be based on finding the smallest saliency (map) $M \in [0, 1]^{H_I \times W_I}$ that must be retained in the image $x$ in order to preserve the network prediction $f(x)$ in a request mask area $R \in \{0, 1\}^{H_O \times W_O}$ for a class (e.g. channel) $c \in \{1,...,C_O\}$, wherein the size of a saliency is based on pixels values of $M$. For example, $M$ is smaller than $M'$ if the $l_1$ norm of the pixel values of $M$ is smaller than the $l_1$ norm of the pixel values of $M'$.

Grid saliency is based on a perturbation saliency approach. This means that a salient image region most responsible for a classifier decision (in a request area) is determined by replacing parts of the image with uninformative pixel values, i.e. perturbing the image, and evaluating the corresponding class prediction change.

Let $p$ denote a perturbation function that removes information from an image $x$ outside of the saliency $M$ (wherein outside means pixels for which M is not 1). For example, such perturbation function can be the interpolation between $x$ and $a \in I$, where $a$ can be a constant colour image, Gaussian blur, or random noise. In this case, $p(x,M) = x \circ M + a \circ (1\text{-}M)$, wherein '$\circ$' denotes the Hadamard product.

It should be noted that in practice the saliency $M$ may be defined on a lower resolution than the input image to avoid adversarial artefacts and may be later upsampled to the input image resolution. In addition, the pixel values of the perturbed image $p(x,M)$ may be clipped to preserve the range of the original image pixel value space.

Based on the above notation, the task of finding the saliency map $M$ for the prediction of class c can be formulated as the optimization

$$M^*(x, c) = \underset{M}{\mathrm{argmin}}\ \lambda \cdot \|M\|_1 + \| \max(f_c(x) - f_c(p(x, M)), 0)\|_1 \qquad (1)$$

where $\|.\|_1$ denotes the $l_1$ norm and $f_c(x)$ is the network prediction for class $c$, i.e. the pixel value of the output image for the class (channel) $c$.

The first term on the right hand side of equation (1) can be considered as a mask loss that minimizes the salient image area such that the original image is perturbed as much as possible. The second term serves as a preservation loss that ensures that the network prediction $f_c(p(x,M))$ for class c on the perturbed image $p(x,M)$ reaches at least the confidence of the network prediction $f_c(x)$ on the original unperturbed input image. Thus, the second loss term can be considered as a penalty for not meeting the constraint $f_c(p(x,M)) > f_c(x)$, hence the use of $\max(\cdot, 0)$ in equation (1). The parameter $\lambda$ controls the sparsity of $M$, i.e. controls how strongly the size of the saliency is punished. An exemplary value of $\lambda$ is 0.05 but other values are possibly to generate smaller or larger saliencies.

It is further possible to spatially disentangle explanations given in the saliency map $M$ for the network predictions in the requested area of interest $R$ from the explanations for the other predictions, by restricting the preservation loss to the request mask $R$ in equation (1) according to

$$M_{\text{grid}}^*(x, R, c) = \underset{M}{\arg\min} \, \lambda \cdot \|M\|_1 + \frac{\|R \circ \max(f_c(x) - f_c(p(x, M)), 0))\|_1}{\|R\|_1} \quad (2)$$

In the following, the result of equation (2) is referred to as a grid saliency map.

The grid saliency formulation from equation (2) may be adapted to specifically provide context explanations for the requested area of interest $R$. Context explanations are of particular interest for semantic segmentation, as context typically often serves as one of the main cues for semantic segmentation networks.

Thus, according to various embodiments, there is a focus on context explanations for semantic labelling predictions and it is assumed that $R$ is the area covering an object of interest in the input image $x$. To optimize for salient parts of the object context, the object request mask $R$ is integrated into the perturbation function. For the request mask $R$, the perturbed image $p(x,R) \in I$ contains only the object information inside $R$ and all the context information outside $R$ is removed (e.g. with a constant colour image $a$).

For optimization (i.e. determination of the saliency) this new perturbed image $p(x,R)$ is used instead of the maximally perturbed image $p(x,M=0)=a$ and the context perturbation function is $p_{\text{context}}(x,R,M)=x \circ M + p(x,R) \circ (1-M)$. In other words, the image information within $R$ is pertained when the input image is perturbed (therefore, the saliency does not "need" to include the request area $R$).

The context saliency map for class c and request object $R$ is then given by

$$M_{\text{context}}^*(x, R, c) = \underset{M}{\arg\min} \, \lambda \cdot \|M\|_1 + \frac{\|R \circ \max(f_c(x) - f_c(p_{\text{context}}(x, R, M)), 0)\|_1}{\|R\|_1} \quad (3)$$

This can be seen as optimizing of the saliency map to select the minimal context necessary to at least yield the original prediction for class c inside the request mask R.

It should be noted that the context saliency map may be seen as a special case of a grid saliency map since the perturbation takes a special form.

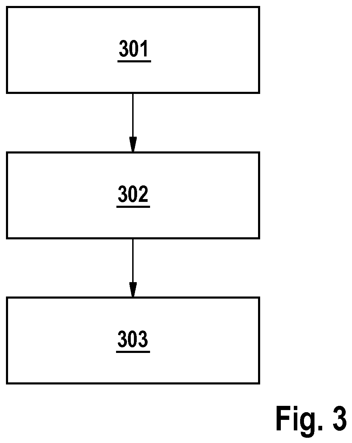

Figure 3 illustrates a saliency determination according to an embodiment.

In 301, a neural network is trained for dense prediction, denoted by a function $f$.

In 302, given the network trained for $f$ (the dense prediction task), an input image $x$ and the prediction (map) of the network $f_c(x)$ for this input image and class $c$ (e.g. output image channel $c$), a target area $R$ in the prediction map for which the visual explanation is required is selected.

In 303, these components are used to define an optimization problem according to equation (3) which is solved to get a saliency map as a post-hoc explanation for the prediction in the target area $R$.

The optimization problem can be solved (i.e. the saliency map can be optimized) using various optimization techniques, such as stochastic gradient descent (SGD) with momentum or Adam. For example, for SGD, a momentum of 0.5 and a learning rate of 0.2 for 100 steps may be used and the saliency map may be initialized with 0.5 for each pixel. Another example is an optimization of a coarse 16 by 32 pixel mask using SGD with a learning rate of 1 for 80 steps.

In 304, the resulting saliency map is used for various purposes, e.g. as visual explanations for the network predictions, as well as for debugging the errors in the trained network and determination of the reliability of a classification.

For example, a controller 102 may determine the reliability of a classification based on the saliency map and may further process a class prediction based on the saliency map. For example, a class prediction may be accepted or discarded for further processing (e.g. vehicle control) depending on the determined context. For example, the controller 102 may discard a classification if the context of the classification does not make sense, e.g. when the determined context does not include a region of an image which can be expected to be relevant as explained in the following.

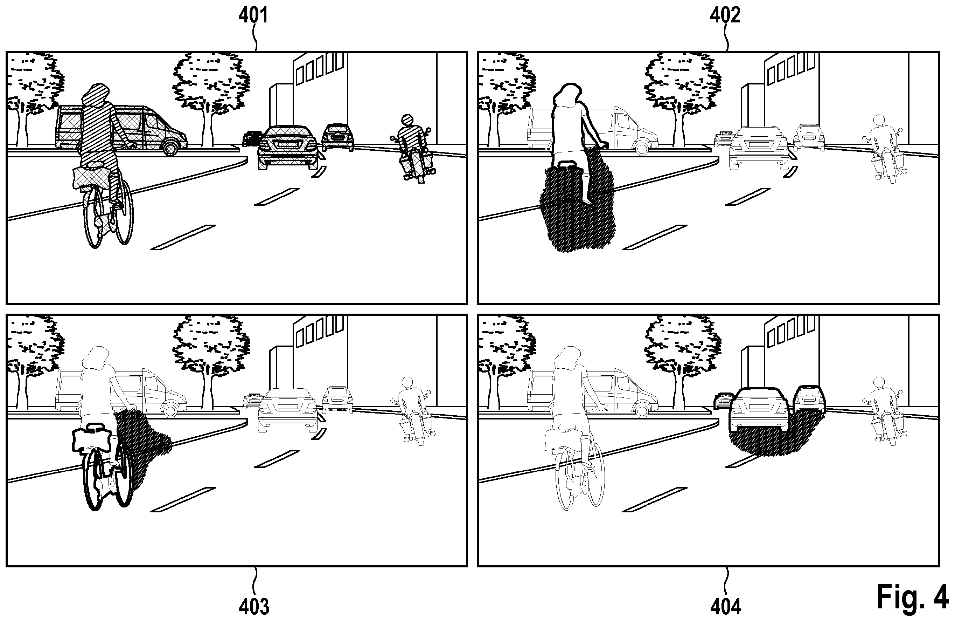

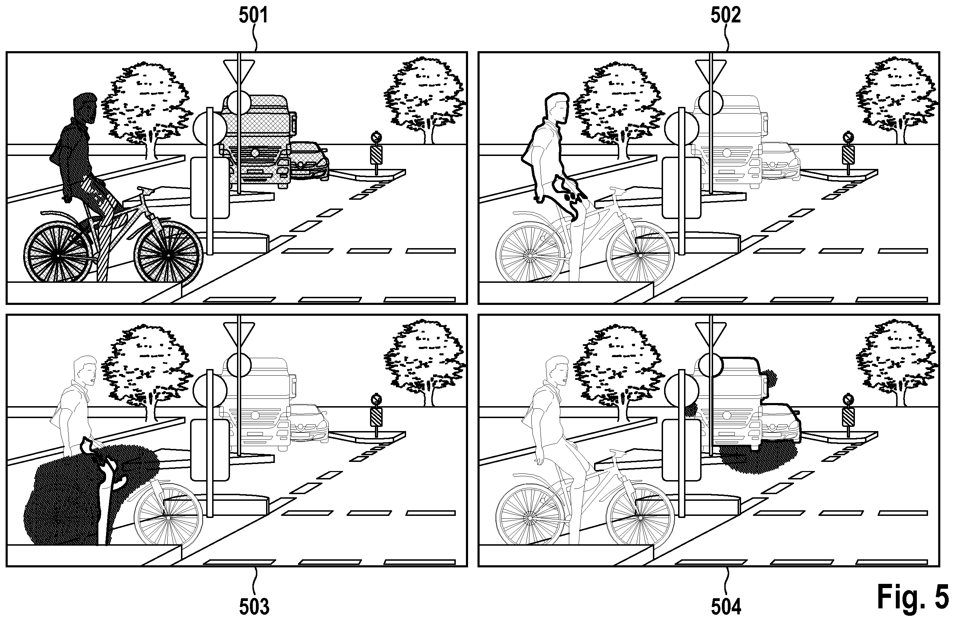

Figures 4 and 5 show examples for saliencies determined according to an embodiment.

In figure 4, a first picture 401 shows the semantic segmentation of a first traffic scene determined by a neural network. A second picture 402 shows context (determined by grid saliency) for the class "rider", a third picture 403 shows context for the class "bike" and a fourth picture 404 shows context for the class "car".

In figure 5, a first picture 501 shows the semantic segmentation of a second traffic scene determined by a neural network. A second picture 502 shows a context for the class "pedestrian", a third picture 403 shows the context for the class "legs" and a fourth picture 404 shows context for the class "car".

As can be seen, grid saliency can be used contextually explain correct predictions: in the second picture 402 of figure 4, the neural network looks at the motorbike to correctly predict the class rider. However, the context explanation by grid saliency for semantic segmentation can also explain erroneous predictions: in the example of figure 5, the upper body of the rider is incorrectly predicted as pedestrian. As can be seen in the second picture 502 of figure 5 for this prediction the bicycle is not salient in contrast to the correctly classified legs of the rider (third picture 503 of figure 5).

This is a case where the controller 102 may discard the classification: Since the bike is not salient for the classification of the rider, but is salient for the rider's legs, the controller may suspect that the bike has been ignored by mistake for the classification of the rider as pedestrian and may ignore this classification.

Grid saliency can for example be used to enhance a trained model (e.g. any dense prediction network) by detecting biases picked up by the trained network via the obtained grid saliency maps. Obtained grid saliency maps can be used for anomaly detection by checking inconsistencies across the saliency explanations for the same semantic object class and identifying the cause of the anomaly by the obtained saliency map. More generally, it can be used to explain any unexpected model behaviour e.g. in case of erroneous predictions for corner cases, grid saliencies can be used to understand which part of the image (any data sample) is "an outlier" (abnormal) and contributes to the failure.

Grid saliency can in particular be used in an on-line diagnosis tool, e.g. in a controller such as vehicle controller 102.

It should be noted that while in the above examples the grid saliency is determined via perturbation it may also be determined based on other approaches such as in a gradient-based manner as explained in the following.

Let $G(x,c) = \partial f_c(x)/\partial x \in \mathbb{R}^{H_I \times W_I \times C_I}$ denote the gradient of the prediction fc for class c with respect to the input image $x \in I$. For VG (Vanilla Gradient), IG (Integrated Gradient) and SG (SmoothGrad) saliency the saliency maps are computed as

$$M^{\text{VG}}(x,c) = \sum_{C_I} \left| G(x,c) \right|, \qquad M^{\text{SG}}(x,c) = \sum_{C_I} \left| \frac{1}{n} \sum_{k=1}^{n} G\left(x + \mathcal{N}(0,\sigma^2), c\right) \right|,$$

$$M^{\text{IG}}(x,c) = \sum_{C_I} \left| \frac{1}{n} \sum_{k=1}^{n} G\left(\frac{k}{n} x, c\right) \right|,$$

$$(4)$$

respectively, wherein n is the number of approximation steps for IG or the number of samples for SG, and $\mathcal{N}(0,\sigma^2)$ represents Gaussian noise with standard deviation $\sigma$.

Similarly to the perturbation-based approach, explanations given in the saliency $M$ for the network predictions in the request area $R$ are spatially disentangled from other predictions. For a given input x and a binary request mask $R$, the normalized network prediction score for class c in the request area $R$ is denoted as

$$S(x,R,c) = \|R \circ f_c(x)\|_1 / \|R\|_1, \; S(x,R,c) \in \mathbb{R}.$$

Similarly to $G(x, c)$, for grid saliency, $G_{\text{grid}}(x, R, c) := \partial S(x,R,c)/\partial x \in \mathbb{R}^{H_I \times W_I \times C_I}$ is defined which directly yields a grid saliency $M_{\text{grid}}^{\text{VG/SG/IG}}(x, R, c)$ by replacing $G(x, c)$ in equation (4) with $G_{\text{grid}}(x, R, c)$. For the gradient-based context saliency, similarly to the perturbation-based approach, only salient pixels outside of the object area (i.e. region of interest) are considered, i.e.

$$M_{\text{context}}^{\text{VG/IG/SG}}(x, R, c) := (1 - R) \circ M_{\text{grid}}^{\text{VG/IG/SG}}(x, R, c). \qquad (5)$$

It should be noted that gradient-based saliency maps are prone to be noisy. Thus, to circumvent this a spatial mean filter may be used on top of the saliency map with a $(W_I/W_S) \times (H_I/H_S)$ kernel and stride, where $W_S \times H_S$ is the resolution of the perturbation-based saliency map.

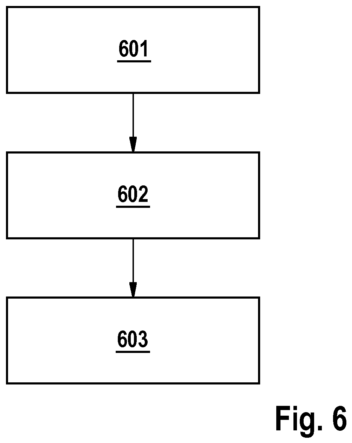

In summary, according to various embodiments, a method is provided as illustrated in figure 6.

Figure 6 shows a flow diagram 600 illustrating a method for operating a neural network, according to an embodiment.

**EP 3 767 543 B1**

In 601, neural network output data is determined, for neural network input sensor data using the neural network, wherein the neural network input data sensor data includes a multiplicity of input data points, each input data point being assigned one or more input data point values and wherein the neural network output data includes a multiplicity of output data points, each output data point being assigned one or more output data point values and wherein each output data point is associated with one or more input data points.

In 602, a portion of output data points is selected out of the multiplicity of output data points to form a region of interest, wherein the region of interest includes a plurality of output data points.

In 603, for each of at least some output data points outside the region of interest, a contribution value is determined representing a contribution of the one or more input data points associated with the output data point for the neural network determining the output data point values assigned to output data points in the region of interest.

According to various embodiments, in other words, a saliency of input data values is determined for a certain region of interest in the output. For example, a preservation loss used as a basis to determine the contribution values (which may be seen as a saliency determination result, e.g. may form a (grid) saliency map) is restricted to the region of interest.

Context explanations for a semantic segmentation in terms of the contribution values are determined. The contribution values are the values of $M \in [0,1]^{HI \times WI}$ in the above example, e.g. a value between 0 and 1 represents the contribution of a pixel (or generally one or more input data point values corresponding to an output data point) to a decision of the neural network regarding the one or more data point values (e.g. the classification) of another data point. Here, the contribution value 0 signifies minimal contribution and the contribution value 1 signifies maximum contribution.

The method of figure 6 may be performed by one or more processors. The term "processor" can be understood as any type of entity that allows the processing of data or signals. For example, the data or signals may be treated according to at least one (i.e., one or more than one) specific function performed by the processor. A processor may include an analogue circuit, a digital circuit, a composite signal circuit, a logic circuit, a microprocessor, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as processor or logic circuitry. It will be understood that one or more of the method steps described in detail herein may be executed (e.g., implemented) by a processor through one or more specific functions performed by the processor.

While in the above examples, the neural network is a dense prediction network for a vehicle having camera images as input data, the approach of figure 6 may be used for neural networks receiving sensor signals received from any sensor, i.e. operating on any kind of input sensor data such as video, radar, LiDAR, ultrasonic and motion.

A generated saliency determination result, e.g. a grid saliency map, may be used as a basis for computation of a control signal for controlling a physical system, like e.g. a computer-controlled machine, like a robot, a vehicle, a domestic appliance, a power tool, a manufacturing machine, a personal assistant or an access control system or a system for conveying information, like a surveillance system or a medical (imaging) system in order to interpret and understand decision making process of the dense prediction network used in the above physical system. It does so by generating low-level visual explanations (e.g. grid saliency maps). In particular, the result image allows identifying the cause of the anomaly by analysing explanations given by the result image.

According to various embodiments, the input data is in the form of images (or at image-like data structures). Thus, according to various embodiments, a method for analysing a neural network, performed by one or more processors, is provided, including determining, for an input image, a result image by means of the neural network, wherein the result image includes a multiplicity of pixels which have each one or more pixel values, selecting a region of interest of the result image and determining regions of the result image outside the region of interest depending on which the neural network has determined the pixel values of the pixels in the region of interest.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims.

## Claims

1. A method for operating a neural network, performed by one or more processors, wherein the neural network is trained for image segmentation, wherein the neural network output data comprises a result image and the result image represents a semantic segmentation, the method comprising:

   • Determining, for neural network input sensor data, neural network output data using the neural network, wherein

7

the neural network input data sensor data comprises a multiplicity of input data points, each input data point being assigned one or more input data point values and wherein the neural network output data comprises a multiplicity of output data points, each output data point being assigned one or more output data point values and wherein each output data point is associated with one or more input data points;

• Selecting a portion of output data points out of the multiplicity of output data points to form a region of interest, wherein the region of interest comprises a plurality of output data points, wherein the region of interest is an image region in the result image; and

• Finding the smallest saliency map identifying the minimum unperturbed area that must be retained in the input image in order to preserve the neural network output data determined in the region of interest, wherein the values of the saliency map are contribution values, and wherein finding the saliency map comprises determining, for each of at least some output data points outside the region of interest, a contribution value representing a contribution of the one or more input data points associated with the output data point for the neural network determining the output data point values assigned to output data points in the region of interest.

2. The method of claim 1, wherein each output data point is associated with one or more input data points by a mapping of input data point coordinates to output data point coordinates.

3. The method of claim 1 or 2, wherein the input data points are structured as an input array and the output data points are structured as an output array and each output data point is associated with one or more input data points by a mapping of positions in the input array to positions in the output array.

4. The method of any one of claims 1 to 3, wherein the input data points are structured as an input image and the output data points are structured as an output image and each output data point is associated with one or more input data points by a mapping of pixel positions in the input array to pixel positions in the output array.

5. The method of any one of claims 1 to 4, comprising determining the contribution value of a data point based on a measure of the effect that a perturbation of input data point values of an input data point associated with the output data point has on the one or more output data point values of the output data point.

6. The method of any one of claims 1 to 5, wherein the contribution values are determined based on a trade-off between a total measure of the contribution values and a preservation loss which occurs when determining the output data point values assigned to output data points in the region of interest and when information in the input data values is disregarded based on the contribution values.

7. The method of any one of claims 1 to 6, wherein the portion of output data points selected to form a region of interest is a true subset of the a multiplicity of output data points of the output data.

8. The method of any one of claims 1 to 7, wherein the output data point value of each output data point specifies a data class of the input data point values of the one or more input data points associated with the output data point.

9. The method of claim 8, wherein the contribution value for an output data point represents a contribution of the one or more input data points associated with the output data point to the decision of the neural network to set the output data point values of the output data point to specify the data class.

10. The method of any one of claims 1 to 9, wherein the neural network input sensor data comprises one or more images.

11. The method of any one of claims 1 to 10, wherein the region of interest corresponds to one or more segments of the semantic segmentation and wherein the result image is a depth image or a motion image.

12. The method of any one of claims 1 to 11, comprising generating a saliency map representing the contribution values, and wherein the contribution values are the pixel values of the saliency map.

13. Device comprising means for carrying out the method of any one of claims 1 to 12.

14. A computer program comprising instructions which, when the program is executed by a computer, cause the computer to carry out the method of any one of claims 1 to 12.

15. A computer-readable storage having stored thereon the computer program of claim 14.

**Patentansprüche**

1. Verfahren zum Betreiben eines neuronalen Netzwerks, das von einem oder mehreren Prozessoren durchgeführt wird, wobei das neuronale Netzwerk für Bildsegmentierung trainiert wird, wobei die Ausgabedaten des neuronalen Netzwerks ein Ergebnisbild umfassen und das Ergebnisbild eine semantische Segmentierung darstellt, wobei das Verfahren Folgendes umfasst:

   • Bestimmen von Ausgabedaten des neuronalen Netzwerks für Eingabesensordaten des neuronalen Netzwerks unter Verwendung des neuronalen Netzwerks, wobei die Eingabedatensensordaten des neuronalen Netzwerks eine Vielzahl von Eingabedatenpunkten umfassen, wobei jedem Eingabedatenpunkt ein oder mehrere Eingabedatenpunktwerte zugewiesen sind und wobei die Ausgabedaten des neuronalen Netzwerks eine Vielzahl von Ausgabedatenpunkten umfassen, wobei jedem Ausgabedatenpunkt ein oder mehrere Ausgabedatenpunktwerte zugewiesen sind und wobei jeder Ausgabedatenpunkt mit einem oder mehreren Eingabedatenpunkten assoziiert ist;
   • Auswählen eines Teils von Ausgabedatenpunkten aus der Vielzahl von Ausgabedatenpunkten, um eine Region von Interesse zu bilden, wobei die Region von Interesse eine Mehrzahl von Ausgabedatenpunkten umfasst, wobei die Region von Interesse eine Bildregion in dem Ergebnisbild ist; und
   • Ermitteln der kleinsten Salienzkarte, die den minimalen ungestörten Bereich identifiziert, der in dem Eingabebild beibehalten werden muss, um die in der Region von Interesse bestimmten Ausgabedaten des neuronalen Netzwerks zu bewahren, wobei die Werte der Salienzkarte Beitragswerte sind, und wobei das Ermitteln der Salienzkarte Bestimmen für jeden von zumindest einigen Ausgabedatenpunkten außerhalb der Region von Interesse eines Beitragswerts umfasst, der einen Beitrag des einen oder der mehreren Eingabedatenpunkte, die mit dem Ausgabedatenpunkt assoziiert sind, für das neuronale Netzwerk darstellt, das die Ausgabedatenpunktwerte bestimmt, die Ausgabedatenpunkten in der Region von Interesse zugewiesen sind.

2. Verfahren nach Anspruch 1, wobei jeder Ausgabedatenpunkt durch eine Zuordnung von Eingabedatenpunktkoordinaten zu Ausgabedatenpunktkoordinaten mit einem oder mehreren Eingabedatenpunkten assoziiert ist.

3. Verfahren nach Anspruch 1 oder 2, wobei die Eingabedatenpunkte als ein Eingabearray strukturiert sind und die Ausgabedatenpunkte als ein Ausgabearray strukturiert sind und jeder Ausgabedatenpunkt durch eine Zuordnung von Positionen in dem Eingabearray zu Positionen in dem Ausgabearray mit einem oder mehreren Eingabedatenpunkten assoziiert ist.

4. Verfahren nach einem der Ansprüche 1 bis 3, wobei die Eingabedatenpunkte als ein Eingabebild strukturiert sind und die Ausgabedatenpunkte als ein Ausgabebild strukturiert sind und jeder Ausgabedatenpunkt durch eine Zuordnung von Pixelpositionen in dem Eingabearray zu Pixelpositionen in dem Ausgabearray mit einem oder mehreren Eingabedatenpunkten assoziiert ist.

5. Verfahren nach einem der Ansprüche 1 bis 4, umfassend Bestimmen des Beitragswerts eines Datenpunkts basierend auf einem Maß für die Auswirkung, die eine Störung von Eingabedatenpunktwerten eines Eingabedatenpunkts, der mit dem Ausgabedatenpunkt assoziiert ist, auf den einen oder die mehreren Ausgabedatenpunktwerte des Ausgabedatenpunkts hat.

6. Verfahren nach einem der Ansprüche 1 bis 5, wobei die Beitragswerte basierend auf einem Kompromiss zwischen einem Gesamtmaß der Beitragswerte und einem Bewahrungsverlust bestimmt werden, der auftritt, wenn die Ausgabedatenpunktwerte bestimmt werden, die Ausgabedatenpunkten in der Region von Interesse zugewiesen sind, und wenn Informationen in den Eingabedatenwerten basierend auf den Beitragswerten nicht berücksichtigt werden.

7. Verfahren nach einem der Ansprüche 1 bis 6, wobei der Teil von Ausgabedatenpunkten, der zum Bilden einer Region von Interesse ausgewählt ist, eine wahre Teilmenge der Vielzahl von Ausgabedatenpunkten der Ausgabedaten ist.

8. Verfahren nach einem der Ansprüche 1 bis 7, wobei der Ausgabedatenpunktwert jedes Ausgabedatenpunkts eine Datenklasse der Eingabedatenpunktwerte des einen oder der mehreren Eingabedatenpunkte spezifiziert, die mit dem Ausgabedatenpunkt assoziiert sind.

9. Verfahren nach Anspruch 8, wobei der Beitragswert für einen Ausgabedatenpunkt einen Beitrag des einen oder der mehreren Eingabedatenpunkte, die mit dem Ausgabedatenpunkt assoziiert sind, zu der Entscheidung des neuronalen Netzwerks darstellt, die Ausgabedatenpunktwerte des Ausgabedatenpunkts einzustellen, um die Datenklasse zu spezifizieren.

10. Verfahren nach einem der Ansprüche 1 bis 9, wobei die Eingabesensordaten des neuronalen Netzwerks ein oder mehrere Bilder umfassen.

11. Verfahren nach einem der Ansprüche 1 bis 10, wobei die Region von Interesse einem oder mehreren Segmenten der semantischen Segmentierung entspricht und wobei das Ergebnisbild ein Tiefenbild oder ein Bewegungsbild ist.

12. Verfahren nach einem der Ansprüche 1 bis 11, umfassend Erzeugen einer Salienzkarte, die die Beitragswerte darstellt, und wobei die Beitragswerte die Pixelwerte der Salienzkarte sind.

13. Vorrichtung, umfassend Mittel zum Durchführen des Verfahrens nach Ansprüchen 1 bis 12.

14. Computerprogramm, umfassend Anweisungen, die, wenn das Programm von einem Computer ausgeführt wird, den Computer veranlassen, das Verfahren nach einem der Ansprüche 1 bis 12 durchzuführen.

15. Computerlesbares Medium, auf dem das Computerprogramm nach Anspruch 14 gespeichert ist.

**Revendications**

1. Procédé de fonctionnement d'un réseau neuronal, réalisé par un ou plusieurs processeurs, le réseau neuronal étant entraîné pour la segmentation d'images, les données de sortie de réseau neuronal comprenant une image de résultat et l'image de résultat représentant une segmentation sémantique, le procédé comprenant :

   • la détermination, pour des données de capteur d'entrée de réseau neuronal, de données de sortie de réseau neuronal au moyen du réseau neuronal, les données de capteur de données d'entrée de réseau neuronal comprenant une multiplicité de points de données d'entrée, chaque point de données d'entrée se voyant attribuer une ou plusieurs valeurs de point de données d'entrée et les données de sortie de réseau neuronal comprenant une multiplicité de points de données de sortie, chaque point de données de sortie se voyant attribuer une ou plusieurs valeurs de point de données de sortie et chaque point de données de sortie étant associé à un ou plusieurs points de données d'entrée ;
   • la sélection d'une partie de points de données de sortie parmi la multiplicité de points de données de sortie pour former une région d'intérêt, la région d'intérêt comprenant une pluralité de points de données de sortie, la région d'intérêt étant une région d'image dans l'image de résultat ; et
   • la recherche de la plus petite carte de saillance identifiant la zone non perturbée minimale qui doit être conservée dans l'image d'entrée afin de préserver les données de sortie de réseau neuronal déterminées dans la région d'intérêt, les valeurs de la carte de saillance étant des valeurs de contribution, et la recherche de la carte de saillance comprenant la détermination, pour chacun d'au moins certains points de données de sortie en dehors de la région d'intérêt, d'une valeur de contribution représentant une contribution du ou des points de données d'entrée associés au point de données de sortie dans la détermination, par le réseau neuronal, des valeurs de point de données de sortie attribuées aux points de données de sortie dans la région d'intérêt.

2. Procédé selon la revendication 1, dans lequel chaque point de données de sortie est associé à un ou plusieurs points de données d'entrée par une mise en correspondance de coordonnées de point de données d'entrée avec des coordonnées de point de données de sortie.

3. Procédé selon la revendication 1 ou 2, dans lequel les points de données d'entrée sont structurés sous forme d'un tableau d'entrée et les points de données de sortie sont structurés sous forme d'un tableau de sortie et chaque point de données de sortie est associé à un ou plusieurs points de données d'entrée par une mise en correspondance de positions dans le tableau d'entrée avec des positions dans le tableau de sortie.

4. Procédé selon l'une quelconque des revendications 1 à 3, dans lequel les points de données d'entrée sont structurés sous forme d'une image d'entrée et les points de données de sortie sont structurés sous forme d'une image de sortie et chaque point de données de sortie est associé à un ou plusieurs points de données d'entrée par une mise en correspondance de positions de pixels dans le tableau d'entrée avec des positions de pixels dans le tableau de sortie.

**5.** Procédé selon l'une quelconque des revendications 1 à 4, comprenant la détermination de la valeur de contribution d'un point de données sur la base d'une mesure de l'effet qu'une perturbation de valeurs de point de données d'entrée d'un point de données d'entrée associé au point de données de sortie a sur la ou les valeurs de point de données de sortie du point de données de sortie.

**6.** Procédé selon l'une quelconque des revendications 1 à 5, dans lequel les valeurs de contribution sont déterminées sur la base d'un compromis entre une mesure totale des valeurs de contribution et une perte de préservation survenant lors de la détermination des valeurs de point de données de sortie affectées à des points de données de sortie dans la région d'intérêt et lorsque des informations dans les valeurs de données d'entrée sont écartées sur la base des valeurs de contribution.

**7.** Procédé selon l'une quelconque des revendications 1 à 6, dans lequel la partie de points de données de sortie sélectionnée pour former une région d'intérêt est un sous-ensemble strict de la multiplicité de points de données de sortie des données de sortie.

**8.** Procédé selon l'une quelconque des revendications 1 à 7, dans lequel la valeur de point de données de sortie de chaque point de données de sortie spécifie une classe de données des valeurs de point de données d'entrée du ou des points de données d'entrée associés au point de données de sortie.

**9.** Procédé selon la revendication 8, dans lequel la valeur de contribution pour un point de données de sortie représente une contribution du ou des points de données d'entrée associés au point de données de sortie à la décision du réseau neuronal de définir les valeurs de point de données de sortie du point de données de sortie afin de spécifier la classe de données.

**10.** Procédé selon l'une quelconque des revendications 1 à 9, dans lequel les données de capteur d'entrée de réseau neuronal comprennent une ou plusieurs images.

**11.** Procédé selon l'une quelconque des revendications 1 à 10, dans lequel la région d'intérêt correspond à un ou plusieurs segments de la segmentation sémantique et dans lequel l'image de résultat est une image de profondeur ou une image de mouvement.

**12.** Procédé selon l'une quelconque des revendications 1 à 11, comprenant la génération d'une carte de saillance représentant les valeurs de contribution, et dans lequel les valeurs de contribution sont les valeurs de pixels de la carte de saillance.

**13.** Dispositif comprenant des moyens pour mettre en œuvre le procédé selon l'une quelconque des revendications 1 à 12.

**14.** Programme d'ordinateur comprenant des instructions qui, lorsque le programme est exécuté par un ordinateur, amènent l'ordinateur à mettre en œuvre le procédé selon l'une quelconque des revendications 1 à 12.

**15.** Support de stockage lisible par ordinateur sur lequel est stocké le programme d'ordinateur selon la revendication 14.

Fig. 1

Fig. 2

**Fig. 3**

Fig. 4

Fig. 5

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAREN SIMONYAN** ; **ANDREA VEDALDI** ; **ANDREW ZISSERMAN**. Deep inside convolutional networks: Visualising image classification models and saliency maps. *International Conference on Learning Representations (ICLR)*, 2013

- **RUTH C. FONG** ; **ANDREA VEDALDI**. Interpretable explanations of black boxes by meaningful perturbation. *2017 in the Proceedings of the IEEE*